# EUROPÄISCHE PATENTANMELDUNG

(11) **EP 4 628 339 A1**
(43) Veröffentlichungstag der Anmeldung: **08.10.2025**
(21) Anmeldenummer: 25159801.7
(22) Anmeldetag: 25.02.2025
(51) Int. Cl.: B60K 17/04, B60K 17/344, B60K 17/346, B60K 17/356

(54) **ANTRIEBSEINRICHTUNG FÜR EIN FAHRZEUG MIT ALLRADANTRIEB**

(30) Priorität: 05.03.2024 DE 102024202059
(71) Anmelder: ZF Friedrichshafen AG, 88046 Friedrichshafen (DE)
(72) Erfinder: BRILKA, Tobias, 94547 Iggensbach (DE); REITINGER, Franz, 4092 Esternberg (AT); PFEFFER, Andreas, 94234 Viechtach (DE); MUEHLBAUER, Alexander, 94575 Windorf (DE)
(74) Vertreter: ZF Friedrichshafen AG

(57) **Zusammenfassung**

Eine Antriebseinrichtung für ein Fahrzeug mit Allradantrieb weist eine Antriebseinheit (1), umfassend eine Antriebsmaschine (11, 12) und eine Zentralwelleneinheit (20), sowie ein erstes und ein zweites Portalgetriebe (30, 40) auf. Die Zentralwelleneinheit (20) ist zur Aufnahme einer Antriebskraft mit der Antriebsmaschine (11, 12) wirkverbunden und weist ein erstes und ein zweites Zentralausgangselement (21, 22) zur Ausgabe der Antriebskraft auf. Das erste und das zweite Portalgetriebe (30, 40) sind über das erste bzw. das zweite Portalgetriebe (40) zum Aufnehmen der Antriebskraft mit der Antriebseinheit (1) wirkverbunden. Das erste und das zweite Portalgetriebe (30, 40) weisen jeweils ein Portalausgangselement (33, 43) auf, das zum Ausgeben der Antriebskraft über ein erstes bzw. zweites Übertragungselement (51, 52) mit einer ersten bzw. zweiten Antriebsachse (71) wirkverbunden ist. Das erste und das zweite Portalausgangselement (33, 43) sind jeweils in einer Richtung versetzt zu einer Drehachse des ersten bzw. zweiten Zentralausgangselements (21, 22) angeordnet.

## Beschreibung

### Technisches Gebiet

Die vorliegende Erfindung bezieht sich auf eine Antriebseinrichtung für ein Fahrzeug mit Allradantrieb und ein Fahrzeug mit Allradantrieb.

### Stand der Technik

Antriebseinheiten für ein Fahrzeug mit Allradantrieb sind bekannt. Eine ausreichende Bodenfreiheit ist eine wesentliche Eigenschaft für Fahrzeuge mit Allradantrieb um im Gelände nicht stecken zu bleiben oder um größere Hindernisse überwinden zu können. Zur Bereitstellung der ausreichenden Bodenfreiheit ist für die Antriebseinheit ein entsprechender Bauraum innerhalb des Fahrzeugs notwendig.

### Darstellung der Erfindung

Der vorliegenden Erfindung liegt die Aufgabe zu Grunde, eine verbesserte, elektrische Antriebseinheit für ein Fahrzeug mit Allradantrieb bereitzustellen, die einen geringen Bauraum aufweist und über ihre Topologie eine höhere Bodenfreiheit herstellt.

Die Aufgabe wird mit einer Antriebseinheit gelöst, die die Merkmale aus Anspruch 1 aufweist. Vorteilhafte Weiterbildungen sind Gegenstand der abhängigen Ansprüche.

Ein erster Aspekt betrifft eine Antriebseinrichtung für ein Fahrzeug mit Allradantrieb. Die Antriebseinrichtung weist eine Antriebseinheit mit zumindest einer Antriebsmaschine, und einer Zentralwelleneinheit, ein erstes Portalgetriebe und ein zweites Portalgetriebe auf. Das Fahrzeug mit Allradantrieb kann beispielsweise von einem LKW oder einem sonstigen Nutzfahrzeug gebildet sein. Das Fahrzeug mit Allradantrieb kann geländegängig sein. Das Fahrzeug mit Allradantrieb kann von einem leichten, mittleren und schweren Fahrzeug mit Allradantrieb oder Lastkraftwagen gebildet sein. Die Antriebsmaschine kann von zumindest einem oder mehreren Elektromotor/en und einem Ein- oder Mehrganggetriebe gebildet sein. Außerdem kann ein Differential oder eine Zu-/Abschaltvorrichtung zu einer der beiden Ausgangsseiten vorliegen.

Die Zentralwelleneinheit weist ein erstes Zentralausgangselement und ein zweites Zentralausgangselement jeweils zur Ausgabe einer Antriebskraft aus der Antriebseinheit auf. Das erste Zentralwellenelement und das zweite Zentralwellenausgangselement können sich in einer Längsrichtung des Fahrzeugs mit Allradantrieb entgegengesetzt zueinander erstecken. Das erste Zentralwellenelement und das zweite Zentralwellenausgangselement können sich in der Längsrichtung bezüglich der Antriebsmaschine auf entgegengesetzten Seiten erstrecken. Die Zentralwelleneinheit kann eine Mehrzahl an Wellen aufweisen. Wellen können hohl gestaltetet sein. Wellen können sich durch andere Wellen hindurch erstrecken. Eine der Wellen kann mit dem ersten Zentralausgangselement drehfest verbunden sein. Eine der Wellen kann mit dem zweiten Zentralausgangselement drehfest verbunden sein. Eine der Wellen kann mit dem ersten und dem zweite Zentralausgangselement drehfest verbunden sein. Die Zentralwelleneinheit ist zur Aufnahme einer Antriebskraft mit der Antriebsmaschine mechanisch wirkverbunden. Eines von einer Welle der Zentralwelleneinheit, dem ersten Zentralausgangselement und dem zweiten Zentralausgangselement kann mit einer Rotorwelle der Antriebsmaschine bzw. des Getriebes drehfest verbunden sein.

Das erste Portalgetriebe ist über das erste Zentralausgangselement zum Aufnehmen einer Antriebskraft mit der Antriebseinheit mechanisch wirkverbunden. Das erste Portalgetriebe kann über zumindest eines von einem Ein- oder Mehrganggetriebe und einem Differentialgetriebe oder einer Zuschaltmechanik mit dem ersten Zentralausgangselement mechanisch wirkverbunden sein. Das erste Portalgetriebe weist ein erstes Portalausgangselement auf, das zum Ausgeben einer Antriebskraft über ein erstes Übertragungselement mit einer ersten Antriebsachse mechanisch wirkverbunden ist. Das erste Übertragungselement kann von einer Drehwelle oder Gelenkwelle gebildet sein. Das erste Portalausgangselement kann von einem Gelenkwellenflansch gebildet sein. Das erste Portalausgangselement kann von einer Keilwelle oder einer Zahnwelle gebildet sein. Die erste Antriebsachse kann von einer Vorderachse oder einer Hinterachse gebildet sein. Die erste Antriebsachse kann mehrere, beispielsweise zwei, Abtriebselemente, beispielsweise Antriebsräder, aufweisen. Die erste Antriebsachse kann von einer lenkbaren Antriebsachse gebildet sein.

Das zweite Portalgetriebe ist über das zweite Zentralausgangselement zum Aufnehmen einer Antriebskraft mit der Antriebseinheit mechanisch wirkverbunden. Das zweite Portalgetriebe kann über zumindest eines von einem Schaltgetriebe (siehe erstes Portalgetriebe) und einem Differentialgetriebe mit dem zweiten Zentralausgangselement mechanisch wirkverbunden sein.

Das zweite Portalgetriebe weist ein zweites Portalausgangselement auf, das zum Ausgeben einer Antriebskraft über ein zweites Übertragungselement mit einer zweiten Antriebsachse mechanisch wirkverbunden ist. Das erste Übertragungselement kann von einer Drehwelle oder Gelenkwelle gebildet sein. Das zweite Portalausgangselement kann von einem Gelenkwellenflansch gebildet sein. Das zweite Portalausgangselement kann von einer Keilwelle oder einer Zahnwelle gebildet sein. Die zweite Antriebsachse kann von einer Vorderachse oder einer Hinterachse gebildet sein. Die zweite Antriebsachse kann mehrere, beispielsweise zwei, Abtriebselemente, beispielsweise Antriebsräder, aufweisen. Die zweite Antriebsachse kann von einer lenkbaren Antriebsachse gebildet sein. Die Antriebseinrichtung kann vier Antriebsräder aufweisen, wobei zwei Antriebsräder an der ersten Antriebsachse, beispielsweise der Vorderachse, und zwei Antriebsräder an der zweiten Antriebsachse, beispielsweise der Hinterachse vorgesehen sind, auch ein Abtrieb auf weitere Achsen mittels Durchtriebsachsen ist möglich.

Das erste Portalausgangselement ist in einer Richtung versetzt zu einer Drehachse des ersten Zentralausgangselements. Das zweite Portalausgangselement ist in einer Richtung versetzt zu einer Drehachse des zweiten Zentralausgangselements angeordnet. Die Richtung kann von einer Schwerkraftrichtung gebildet sein. Da die Antriebseinheit so hoch wie möglich aber so tief wie nötig eingebaut wird, orientieren sich die Portale hier in Richtung Boden, allerdings kann auch ein leicht seitlicher Versatz vorteilhaft sein, wenn Achsen verwendet werden, die einen seitlich versetzten Eintrieb haben) Das jeweilige Portalausgangselement kann zu dem jeweiligen Zentralausgangselement in der Schwerkraftrichtung nach unten versetzt angeordnet sein. Die Richtung kann eine Querrichtung aufweisen. Die Querrichtung kann senkrecht zu einer Fahrbewegungsrichtung ausgerichtet sein. Die Fahrbewegungsrichtung kann eine Längsrichtung bilden. Das jeweilige Portalausgangselement kann zu dem jeweiligen Zentralausgangselement in der Schwerkraftrichtung und in der Querrichtung schräg nach unten vorne oder unten hinten versetzt angeordnet sein. Insofern kann das erste Portalgetriebe und das zweite Portalgetriebe jeweils eine Versatzrichtung und Versatzdistanz bereitstellen. Das erste Portalgetriebe und das zweite Portalgetriebe können die gleiche Versatzrichtung und Versatzdistanz bereitstellen.

Sind zwei Elemente mechanisch wirkverbunden, so sind diese unmittelbar oder mittelbar derart miteinander gekoppelt, dass eine Bewegung des einen Elements eine Reaktion des anderen Elements bewirkt. Beispielsweise kann eine mechanische Wirkverbindung durch eine formschlüssige oder reibschlüssige Verbindung bereitgestellt werden. Die mechanische Wirkverbindung kann einem Kämmen von korrespondierenden Verzahnungen der zwei Elemente entsprechen. Zwischen den Elementen können dabei weitere Elemente, beispielsweise eine oder mehrere Stirnradstufen, vorgesehen sein. Unter einer permanent drehfesten Verbindung zweier Elemente wird hingegen eine Verbindung verstanden, bei welcher die beiden Elemente zu allen bestimmungsgemäßen Zuständen des Getriebes starr miteinander gekoppelt sind. Die Elemente können dabei als drehfest miteinander verbundene Einzelkomponenten oder auch einstückig vorliegen. Über ein Schaltelement, beispielsweise eine Kupplung oder Bremse, kann hingegen eine drehfeste Verbindung zwischen zwei Elementen selektiv hergestellt oder aufgelöst werden.

Die Antriebseinheit kann ein Antriebsgehäuse aufweisen. Das erste Portalgetriebe und das zweite Portalgetriebe kann jeweils ein Portalgehäuse aufweisen. Das jeweilige Portalausgangselement kann zu dem jeweiligen Zentralausgangselement in der Versatzrichtung so versetzt angeordnet sein, dass eine Unterseite des Antriebsgehäuses mit einer Unterseite zumindest eines der Portalgehäuse fluchtet. Das jeweilige Portalausgangselement kann zu dem jeweiligen Zentralausgangselement in der Versatzrichtung so versetzt angeordnet sein, dass eine Unterseite zumindest eines der Portalgehäuse eine Unterseite des Antriebsgehäuses in der Schwerkraftrichtung nach unten überragt. Eines von dem ersten Zentralausgangselement und dem zweiten Zentralausgangselement kann als Ausgangswelle ausgestaltet sein. Eines von dem ersten Zentralausgangselement und dem zweiten Zentralausgangselement kann eine Mitnehmerverzahnung, beispielsweise eine Zahnwelle oder Keilwelle aufweisen.

Eines von dem ersten Portalgetriebe und dem zweiten Portalgetriebe kann eine Ausgangsübersetzungsverhältnis von kleiner 1, größer 1 oder gleich 1 aufweisen. Insofern kann eines von dem ersten Portalgetriebe und dem zweiten Portalgetriebe ein Ausgangsübersetzungsverhältnis aufweisen, das eine Drehzahl erhöht oder verringert. Sowohl das erste Portalgetriebe und das zweite Portalgetriebe können ein Ausgangsübersetzungsverhältnis aufweisen, das eine Drehzahl verringert. Das erste Portalgetriebe kann ein erstes Eingangszahnrad und ein erstes Ausgangszahnrad aufweisen. Das zweite Portalgetriebe kann ein zweites Eingangszahnrad und ein zweites Ausgangszahnrad aufweisen. Das jeweilige Ausgangszahnrad kann eine größere Zähnezahl aufweisen, als das jeweilige Eingangszahnrad. Das jeweilige Eingangszahnrad kann mit dem jeweiligen Ausgangszahnrad in Eingriff sein. Über die Portalgetriebe kann eine Abtriebsdrehzahl und Zugkraft der Antriebseinrichtung modular optimierbar sein.

Das jeweilige Eingangszahnrad kann drehfest mit dem jeweiligen Zentralausgangselement verbunden sein. Das jeweilige Eingangszahnrad kann koaxial mit dem jeweiligen Zentralausgangselementangeordnet sein. Das jeweilige Eingangszahnrad kann von dem jeweiligen Zentralausgangselement ausgebildet werden. Das erste Portalausgangselement kann koaxial zudem zweitem Portalausgangselement angeordnet sein. Das erste Portalausgangselement kann in der Längsrichtung symmetrisch zu dem zweitem Portalausgangselement ausgestaltet sein.

Durch die in der Versatzrichtung versetzten Portalausgangselemente kann eine hohe Bodenfreiheit bereitgestellt werden. Außerdem kann ein Gelenkwinkel relativ zu der Längsrichtung klein ausgestaltet sein. Dadurch kann eine kompakte Bauweise bereitgestellt werden. Dadurch kann in dem Fahrzeug mit Allradantrieb ein Bauraum für Fahrzeugkomponenten, wie eine Batterie oder Brennstoffzellen-Komponenten, bereitgestellt werden. Damit kann die Reichweite des Fahrzeugs verbessert werden.

In einer Ausführungsform der Antriebseinrichtung kann das ersten Portalgetriebe und das zweite Portalgetriebe bezogen auf die Antriebseinheit in der Längsrichtung an entgegengesetzten Seiten angeordnet sein. Das ersten Portalgetriebe und das zweite Portalgetriebe können in der Längsrichtung symmetrisch zueinander ausgestaltet sein. Das ersten Portalgetriebe und das zweite Portalgetriebe können zumindest eines von einem gleichen Ausgangsübersetzungsverhältnis, einer gleichen Verzahnungsart, einer gleichen Versatzrichtung und einem gleichen Getriebeaufbau aufweisen.

In einer Ausführungsform der Antriebseinrichtung kann zumindest eines von dem ersten Portalgetriebe und dem zweiten Portalgetriebe von einem Stirnradgetriebe gebildet sein. Drehachsen von dem jeweiligen Portalausgangselement und dem jeweiligen Zentralausgangselement können parallel angeordnet sein. Eines von dem ersten Portalgetriebe und dem zweiten Portalgetriebe kann ein Vorgelege bilden. Das jeweilige Eingangszahnrad und das jeweilige Ausgangszahnrad können jeweils von einem Stirnrad gebildet sein. Eines der Stirnräder kann eine Außenverzahnung aufweisen. Alle der Stirnräder können eine Außenverzahnung aufweisen. Eines der Stirnräder kann als Hohlrad ausgestaltet sein. Das jeweilige Eingangszahnrad kann als Hohlrad ausgestaltet sein. Das Hohlrad kann eine Innenverzahnung aufweisen. Das erste Ausgangszahnrad und das zweite Ausgangszahnrad können von einem Hohlrad gebildet sein. Dadurch kann ein kleines Ausgangsübersetzungsverhältnis von kleiner als 1 bereitgestellt werden.

In einer Ausführungsform der Antriebseinrichtung kann zumindest eines von dem ersten Portalgetriebe und dem zweiten Portalgetriebe von einem ein Kegelradgetriebe gebildet sein. Das jeweilige Eingangszahnrad und das jeweilige Ausgangszahnrad können jeweils eine Beveloidverzahnug aufweisen. Die Drehachse des jeweiligen Portalausgangselements kann bezüglich der Drehachse des jeweiligen Zentralausgangselements in der Schwerkraftrichtung nach unten geneigt sein. Die Drehachse des jeweiligen Portalausgangselements kann in Richtung einer Drehachse des jeweiligen Übertragungselements ausgerichtet sein. Dadurch kann ein Knickwinkel zwischen dem jeweiligen Übertragungselement und dem jeweiligen Portalausgangselement klein gestaltet sein. Dadurch kann eine gleichmäßige Drehbewegung des jeweiligen Übertragungselements bereitgestellt werden. Außerdem kann eine hohe Lebensdauer der Übertragungselemente bereitgestellt werden.

In einer Ausführungsform der Antriebseinrichtung kann zumindest eine von der ersten Antriebsachse und der zweiten Antriebsachse als Durchtriebsachse ausgestaltet sein und zum Ausgeben einer Antriebskraft mit einer weiteren Antriebsachse mechanisch wirkverbunden sein. Die Antriebseinrichtung kann ein weiteres Übertragungselement, beispielsweise eine Drehwelle oder eine Gelenkwelle, zum Ausgeben der Antriebskraft an die weitere Antriebsachse aufweisen. Die Durchtriebsachse und die weitere Antriebsachse können eine Doppelantriebsachse, beispielsweise eine Doppelhinterachse bilden.

In einer Ausführungsform der Antriebseinrichtung kann zumindest eine der Antriebsachsen ein Differentialgetriebe zum Antreiben von zwei Antriebsrädern aufweisen. Das Differentialgetriebe kann zum Aufteilen einer Antriebskraft auf zwei Antriebsräder einer der ersten Antriebsachse oder der zweiten Antriebsachse eingerichtet sein. Das Differentialgetriebe kann zumindest eines von einem Kegelraddifferentialgetriebe und einem Planetenraddifferentialgetriebe aufweisen. Einer der Antriebsachsen kann ein Differentialgetriebe vorgeschaltet sein. Das Differentialgetriebe kann ein Übersetzungsverhältnis größer 1, kleiner 1 oder gleich 1 aufweisen.

In einer Ausführungsform der Antriebseinrichtung kann die Antriebseinheit zwei Antriebsmaschinen aufweisen, die zum Ausgeben einer Antriebskraft mit der Zentralwelleneinheit mechanisch wirkverbunden sind. Die Antriebsmaschinen können koaxial zueinander angeordnet sein. Jede der Antriebsmaschinen kann von einem Elektromotor gebildet sein. Die beiden Antriebsmaschinen können von zwei Motoren mit getrennten Wicklungen gebildet werden. Die beiden Antriebsmaschinen können eine gemeinsame Rotorwelle aufweisen. Die beiden Antriebsmaschinen können einen Doppelrotor aufweisen. Die Rotorwellen der beiden Antriebsmaschinen können aneinander gekoppelt, beispielsweise mechanisch wirkverbunden oder drehfest verbunden, sein. Die Rotorwellen der beiden Antriebsmaschinen können über ein Summiergetriebe aneinander gekoppelt sein. Die beiden Antriebsmaschinen können innerhalb des Antriebsgehäuses angeordnet sein.

In einer Ausführungsform der Antriebseinrichtung weist die Antriebseinheit ein Differentialgetriebe auf, das zum Aufnehmen einer Antriebskraft mit der Antriebsmaschine mechanisch wirkverbunden ist und zum Ausgeben einer Antriebskraft mit dem ersten Portalgetriebe und dem zweiten Portalgetriebe mechanisch wirkverbunden ist. Das Differentialgetriebe kann eine Übersetzungsverhältnis größer 1, kleiner 1 oder gleich 1 aufweisen. Das Differentialgetriebe kann ein Leistungsverteilungsverhältnis, beispielsweise zwischen der ersten Antriebsachse und der zweiten Antriebsachse von 50:50 oder 1:2 aufweisen und kann mechanisch gesperrt werden. Zumindest eine der Antriebsachsen kann über ein Schaltelement, beispielsweise als eine Vorderachszuschaltung, zugeschaltet werden. Eine der Antriebsachsen kann über ein Schaltelement, beispielsweise als eine Vorderachszuschaltung, ohne Differentialgetriebe zugeschaltet werden. Das Differentialgetriebe kann innerhalb des Antriebsgehäuses angeordnet sein. Das Differentialgetriebe kann über die Zentralwelleneinheit mit der Antriebsmaschine wirkverbunden sein. Ein Drehelement, beispielsweise ein Eingangszahnrad, des Differentialgetriebes kann drehfest mit einer Welle der Zentralwelleneinheit verbunden sein. Das Differentialgetriebe kann zwei Ausgangselemente aufweisen. Das erste Zentralausgangselement und das zweite Zentralausgangselement kann jeweils mit einem Ausgangselement des Differentialgetriebes drehfest verbunden sein.

In einer Ausführungsform der Antriebseinrichtung weist die Antriebseinheit ein Ein- oder Mehrganggetriebe auf, das über die Zentralwelleneinheit zum Aufnehmen einer Antriebskraft mit der Antriebsmaschine mechanisch wirkverbunden ist und zum Ausgeben einer Antriebskraft mit dem ersten Portalgetriebe und dem zweiten Portalgetriebe mechanisch wirkverbunden ist.

Das Schaltgetriebe kann einen oder mehrere Planetenradsätze aufweisen. Das Schaltgetriebe kann ein Eingangselement, beispielsweise ein Antriebszahnrad, aufweisen. Das Eingangselement kann als Sonnenrad ausgestaltet sein. Das Eingangselement kann über die Zentralwelleneinheit drehfest mit der Rotorwelle einer der Antriebsmaschinen verbunden sein. Das Eingangselement kann drehfest mit der Rotorwelle einer der Antriebsmaschinen verbunden sein. Das Schaltgetriebe kann drei schaltbare Übersetzungsverhältnisse bereitstellen. Jedes Übersetzungsverhältnis kann mit einem Gang in Zusammenhang sein, der für das Fahrzeug mit Allradantrieb wählbar ist und in dem das Fahrzeug mit Allradantrieb gefahren werden kann.

Das Schaltgetriebe kann in der Längsrichtung auf der Vorderseite der Antriebsmaschine angeordnet sein. Das Schaltgetriebe kann in der Längsrichtung zwischen der Antriebsmaschine und dem Differentialgetriebe angeordnet sein. Das Schaltgetriebe kann innerhalb des Antriebsgehäuses angeordnet sein. Das Differentialgetriebe kann über die Zentralwelleneinheit mit dem Schaltgetriebe wirkverbunden sein. Das Differentialgetriebe kann über die Zentralwelleneinheit und das Schaltgetriebe mit der Antriebsmaschine wirkverbunden sein. Ein Drehelement, beispielsweise ein Eingangszahnrad, des Differentialgetriebes kann drehfest mit einem Drehelement, beispielsweise einem Ausgangszahnrad, des Schaltgetriebes verbunden sein. Das Schaltgetriebe kann über die Zentralwelleneinheit mit dem ersten Portalgetriebe und dem zweiten Portalgetriebe mechanisch wirkverbunden sein.

Das Schaltgetriebe kann die zwei Antriebsmaschinenaufweisen. Das Schaltgetriebe kann eine Leistung, beispielsweise eines von einer Drehzahl und einem Drehmoment an das Differentialgetriebe übertragen. Das Differentialgetriebe kann zu dem Schaltgetriebe zuschaltbar ausgestaltet sein, beispielsweise über ein Schaltelement.

Die Zentralwelleneinheit, oder eine Welle von der Zentralwelleneinheit, kann sich in der Längsrichtung beispielsweise von dem Differentialgetriebe oder zumindest einer der Antriebsmaschinen nach vorne durch das Schaltgetriebe zu dem ersten Portalgetriebe und nach hinten zu dem zweiten Portalgetriebe erstrecken. Über die Portalgetriebe kann ein Drehmoment- und Geschwindigkeitsniveau des Fahrzeugs via der Achsübersetzungen mit Allradantrieb optimiert für einen bestimmten Anwendungsfall sichergestellt sein.

Durch eine entsprechende Auswahl eines Übersetzungsverhältnis von zumindest einem von dem Schaltgetriebe, dem Differentialgetriebe und den Portalgetrieben kann eine optimale Spreizung für hohe Geschwindigkeiten und hohe Zugkräfte bereitgestellt werden. Die Übersetzungsverhältnisse der Antriebseinrichtung kann so ausgestaltet sein, dass die Antriebseinheit und die Portalgetriebe beispielsweise über entsprechend ausgestaltete Übertragungselemente mechanisch mit bestehenden Antriebsachsen von bestehenden Fahrzeugen mit Allradantrieb wirkverbindbar sind.

Ein zweiter Aspekt betrifft ein Fahrzeug, beispielsweise ein Fahrzeug mit Allradantrieb. Das Fahrzeug weist eine Antriebseinrichtung gemäß dem ersten Aspekt auf. Jeweilige weitere Merkmale, Ausführungsformen und Vorteile sind den Beschreibungen des ersten Aspekts zu entnehmen. Umgekehrt stellen auch Merkmale, Ausführungsformen und Vorteile des zweiten Aspekts Merkmale, Ausführungsformen und Vorteile des ersten Aspekts dar. Das Fahrzeug weist zumindest vier Abtriebselemente auf. Zwei der Abtriebselemente sind von der ersten Antriebsachse antreibbar. Die anderen beiden Abtriebselemente sind von der zweiten Antriebsachse antreibbar. Die Abtriebselemente können über zumindest eines von dem Schaltgetriebe und dem Differentialgetriebe von der Antriebsmaschine der Antriebseinrichtung antreibbar sein. Ein Abtriebselement kann als ein Rad oder eine Fahrkette ausgebildet sein. Das Fahrzeug kann mit den Abtriebselementen beispielsweise auf einem Untergrund stehen.

### Kurze Beschreibung der Figuren

Figur 1 zeigt eine Ausführungsform einer Antriebseinrichtung für ein Fahrzeug mit Allradantrieb.
Figur 2 zeigt schematisch ein Detail einer weiteren Ausführungsform der Antriebseinrichtung.
Figur 3 zeigt schematisch ein Detail einer weiteren Ausführungsform der Antriebseinrichtung.
Figur 4 zeigt schematisch ein Detail einer weiteren Ausführungsform der Antriebseinrichtung.

### Detaillierte Beschreibung von Ausführungsformen

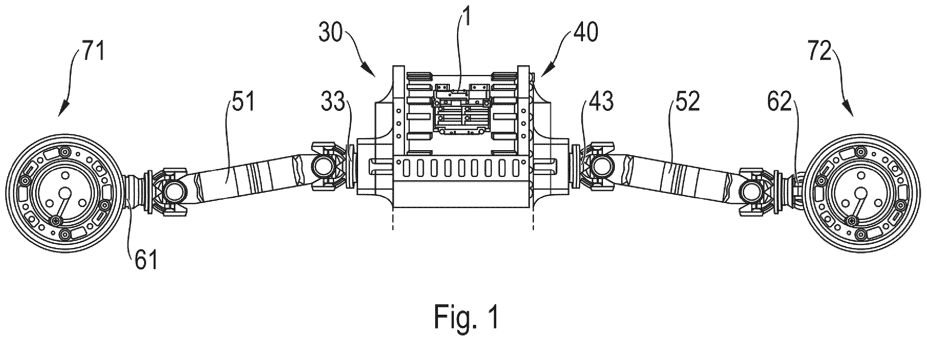

Figur 1 zeigt eine Ausführungsform einer Antriebseinrichtung für ein Fahrzeug mit Allradantrieb, beispielsweise ein geländegängiges Nutzfahrzeug. Die Antriebseinrichtung weist eine erste Antriebsachse 71, vorliegend einer Vorderachse, mit einem ersten Differentialgetriebe 61 und eine zweite Antriebsachse 72, vorliegend eine Hinterachse, mit einem zweiten Differentialgetriebe 62 auf. Jede der ersten Antriebsachse 71 und der zweiten Antriebsachse 72 weist zwei Antriebsräder auf, die über das entsprechende Differentialgetriebe 61, 62 angetrieben werden. Die erste Antriebsachse 71 und die zweite Antriebsachse 72 sind in einer Querrichtung ausgerichtet und in einer Längsrichtung beabstandet zueinander und auf entgegengesetzten Seiten einer Antriebseinheit 1 angeordnet.

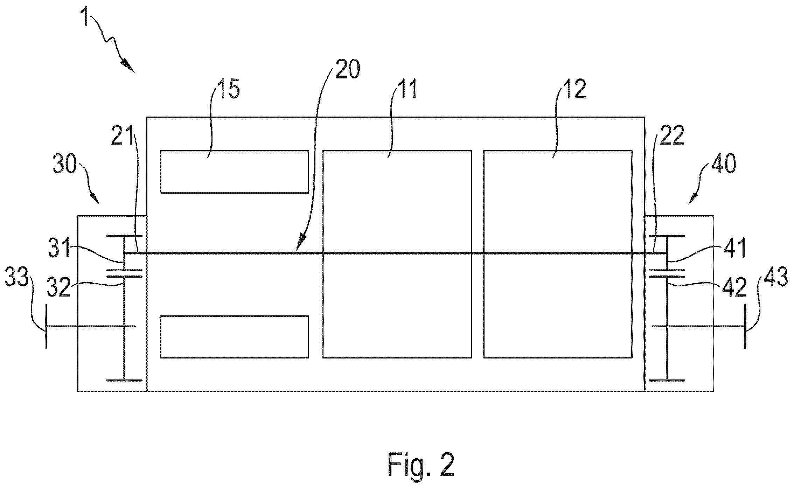

Die Antriebseinrichtung weist die Antriebseinheit 1 mit zwei Antriebsmaschinen, 11, 12, vorliegend Elektromotoren, und einer in Figur 2 dargestellten Zentralwelleneinheit 20, ein erstes Portalgetriebe 30 und ein zweites Portalgetriebe 40 auf. Die Zentralwelleneinheit 20 weist ein erstes Zentralausgangselement 21 und ein zweites Zentralausgangselement 22 auf. Das erste Portalgetriebe 30 weist ein erstes Portalausgangselement 33, vorliegend einen Gelenkwellenflansch, auf. Das zweite Portalgetriebe 40 weist ein zweites Portalausgangselement 43, vorliegend einen Gelenkwellenflansch, auf. Das jeweilige Portalausgangselement 33, 43 ist über das jeweilige Portalgetriebe 30, 40 mit dem jeweiligen Zentralausgangselement 21, 22 mechanisch wirkverbunden.

Das erste Portalausgangselement 33 ist über ein erstes Übertragungselement 51, vorliegend eine Gelenkwelle, mit dem ersten Differentialgetriebe 61 mechanisch wirkverbunden. Das zweite Portalausgangselement 43 ist über ein zweites Übertragungselement 52, vorliegend eine Gelenkwelle, mit dem zweiten Differentialgetriebe 62 mechanisch wirkverbunden. Dadurch ist die Antriebseinrichtung zum Antrieb der Antriebsräder über die Antriebseinheit 1 eingerichtet.

Die Antriebseinheit 1 weist ein Antriebsgehäuse auf, an das in der Längsrichtung auf entgegengesetzten Seiten ein Portalgehäuse des ersten Portalgetriebes 30 und ein Portalgehäuse des zweiten Portalgetriebes 40 über in der Längsrichtung ausgerichtete Verschraubungen befestigt sind. Das erste Portalausgangselement 33 ist in einer Versatzrichtung, vorliegend der Schwerkraftrichtung nach unten, um eine Versatzdistanz versetzt zu einer Drehachse des ersten Zentralausgangselements 21 angeordnet. Das zweite Portalausgangselement 43 ist in der gleichen Versatzrichtung und um die gleiche Versatzdistanz versetzt zu einer Drehachse des zweiten Zentralausgangselements 22 angeordnet. Das Antriebsgehäuse ist in einer Schwerkraftrichtung so weit nach oben versetzt angeordnet, dass eine Unterseite des Antriebsgehäuses in der Längsrichtung im Wesentlichen mit der Unterseite der Portalgehäuse fluchtet.

Dadurch ist die Neigung jeweils des ersten Übertragungselements 51 und des zweiten Übertragungselements 52 bezüglich der Längsrichtung gering. Ferner ist eine Erstreckung der Antriebseinheit 1 bezogen auf das erste Portalausgangselement 33 und das zweite Portalausgangselement 43 in der Schwerkraftrichtung nach unten gering. Dadurch ist eine große Bodenfreiheit der Antriebseinrichtung bereitgestellt.

Figur 2 zeigt schematisch ein Detail einer weiteren Ausführungsform der Antriebseinrichtung. Die vorliegende Ausführungsform weist alle Merkmale der vorhergehenden Ausführungsform auf. Jede der beiden Antriebsmaschinen 11, 12, weist eine Rotorwelle auf, die über die Zentralwelleneinheit 20 drehfest miteinander verbunden sind. Die Antriebseinheit 1 weist ein Schaltgetriebe 15 mit drei Schaltstufen auf, das von einem Planetenradsatz gebildet wird. Die Zentralwelleneinheit 20 erstreckt sich in der Längsrichtung nach vorne durch das Schaltgetriebe15 zu dem ersten Portalgetriebe 30 und nach hinten zu dem zweiten Portalgetriebe 40. Alternativ könnte das Ein-/ Mehrganggetriebe auch innerhalb der E-Motoren liegen, quasi umschlossen von den E-Motoren. Die Zentralwelleneinheit 20, insbesondere das erste Zentralausgangselement 21 und das zweite Zentralwellenausgangselement 22, die Antriebsmaschinen 11, 12 und das Schaltgetriebe 15 sind koaxial zueinander angeordnet.

In der vorliegenden Ausführungsform ist das erste Portalgetriebe 30 und das zweite Portalgetriebe 40 jeweils als ein Stirnradgetriebe ausgestaltet. Das erste Portalgetriebe 30 weist ein erstes Eingangszahnrad 31 und ein erstes Ausgangszahnrad 32 auf. Das zweite Portalgetriebe 40 weist ein zweites Eingangszahnrad 41 und ein zweites Ausgangszahnrad 42 auf. Das jeweilige Eingangszahnrad 31, 41 ist drehfest mit dem jeweiligen Zentralausgangselement 21, 22 verbunden. Das jeweilige Eingangszahnrad 31, 41 ist in Eingriff mit dem jeweiligen Ausgangszahnrad 32, 42. Die Stirnradgetriebe weisen jeweils ein Ausgangsübersetzungsverhältnis von dem Eingangselement 31, 41 zu dem Ausgangselement 32, 42 von kleiner als 1 auf. Das jeweilige Ausgangszahnrad 32, 42 ist drehfest mit dem jeweiligen Portalausgangselement 33, 43 verbunden. Die Drehachse des jeweiligen Portalausgangselements 33, 43 ist parallel zu der Drehachse des jeweiligen Zentralausgangselementes 21, 22.

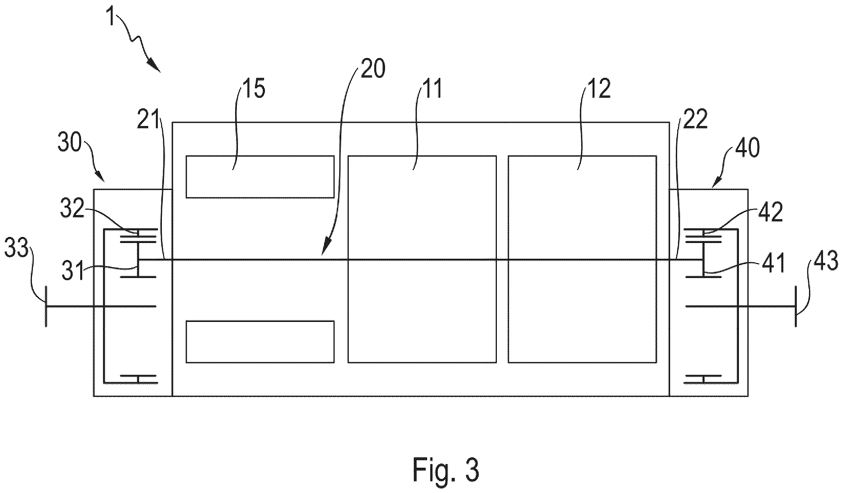

Figur 3 zeigt schematisch ein Detail einer weiteren Ausführungsform der Antriebseinrichtung. Die vorliegende Ausführungsform unterscheidet sich von der vorhergehenden Ausführungsform durch die Gestaltung des ersten Ausgangszahnrad 32 und des zweiten Ausgangszahnrads 42. Vorliegend ist das erste Ausgangszahnrad 32 und das zweite Ausgangszahnrad 42 jeweils als Hohlrad mit einer Innenverzahnung ausgestaltet. Dadurch ist das Ausgangsübersetzungsverhältnis kleiner als in der vorhergehenden Ausführungsform.

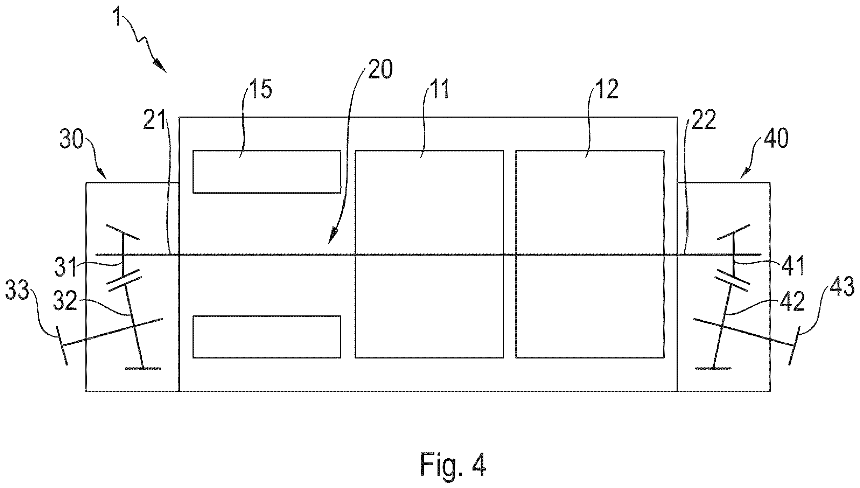

Figur 4 zeigt schematisch ein Detail einer weiteren Ausführungsform der Antriebseinrichtung. Die vorliegende Ausführungsform unterscheidet sich von der mit Bezug auf Figur 2 beschriebenen Ausführungsform durch die Gestaltung des ersten Portalgetriebes 30 und des zweiten Portalgetriebes 40. Vorliegend ist das erste Portalgetriebe 30 und das zweite Portalgetriebe 40 jeweils als ein Kegelradgetriebe, vorliegend einem Beveloidgetriebe, ausgestaltet. Die Ausrichtung der Drehachse des ersten Portalausgangselements 33 und des zweiten Portalausgangselements 43 ist jeweils leicht nach unten geneigt. Die Drehachse des ersten Portalausgangselements 33 und des zweiten Portalausgangselements 43 verläuft in Richtung des jeweiligen Übertragungselements 51, 52. Dadurch wird eine gleichmäßige Drehbewegung unterstützt und ein Gelenkwellenbeugewinkel reduziert.

### Bezugszeichen

- 1: Antriebseinheit

- 11: Erste Antriebsmaschine
- 12: Zweite Antriebsmaschine

- 15: Schaltgetriebe, Ein-/Mehrganggetriebe mit Differential oder Zuschaltung

- 20: Zentralwelleneinheit
- 21: Erstes Zentralausgangselement
- 22: Zweites Zentralausgangselement

- 30: Erstes Portalgetriebe
- 31: Erstes Eingangszahnrad
- 32: Erstes Ausgangszahnrad
- 33: Erstes Portalausgangselement

- 40: Zweites Portalgetriebe
- 41: Erstes Eingangszahnrad
- 42: Zweites Ausgangszahnrad
- 43: Zweites Portalausgangselement

- 51: Erstes Übertragungselement
- 52: Zweites Übertragungselement

- 61: Erstes Differentialgetriebe
- 62: Zweites Differentialgetriebe

- 71: Erste Antriebsachse
- 72: Zweite Antriebsachse

## Patentansprüche

1. Antriebseinrichtung für ein Fahrzeug mit Allradantrieb mit einer Antriebseinheit (1), die zumindest eine Antriebsmaschine (11, 12) und eine Zentralwelleneinheit (20) aufweist, einem ersten Portalgetriebe (30) und einem zweiten Portalgetriebe (40), wobei die Zentralwelleneinheit (20) ein erstes Zentralausgangselement (21) und ein zweites Zentralausgangselement (22) jeweils zur Ausgabe einer Antriebskraft aus der Antriebseinheit (1) aufweist und zur Aufnahme einer Antriebskraft mit der Antriebsmaschine (11, 12) mechanisch wirkverbunden ist,
das erste Portalgetriebe (30) über das erste Zentralausgangselement (21) zum Aufnehmen einer Antriebskraft mit der Antriebseinheit (1) mechanisch wirkverbunden ist und ein erstes Portalausgangselement (33) aufweist, das zum Ausgeben einer Antriebskraft über ein erstes Übertragungselement (51) mit einer ersten Antriebsachse (71) mechanisch wirkverbunden ist,
das zweite Portalgetriebe (40) über das zweite Zentralausgangselement (22) zum Aufnehmen einer Antriebskraft mit der Antriebseinheit (1) mechanisch wirkverbunden ist und ein zweites Portalausgangselement (43) aufweist, das zum Ausgeben einer Antriebskraft über ein zweites Übertragungselement (52) mit einer zweiten Antriebsachse (72) mechanisch wirkverbunden ist, und
das erste Portalausgangselement (33) in einer Richtung versetzt zu einer Drehachse des ersten Zentralausgangselements (21) und das zweite Portalausgangselement (43) in einer Richtung versetzt zu der Drehachse des zweiten Zentralausgangselements (22) angeordnet sind.

2. Antriebseinrichtung nach Anspruch 1, **dadurch gekennzeichnet, dass** das erste Portalgetriebe (30) und das zweite Portalgetriebe (40) bezogen auf die Antriebseinheit (1) in einer Längsrichtung an entgegengesetzt Seiten angeordnet sind.

3. Antriebseinrichtung nach einem der vorhergehenden Ansprüche, wobei zumindest eines von dem ersten Portalgetriebe (30) und dem zweiten Portalgetriebe (40) ein Stirnradgetriebe aufweist.

4. Antriebseinrichtung nach einem der vorhergehenden Ansprüche, **dadurch gekennzeichnet, dass** zumindest eines von dem ersten Portalgetriebe (30) und dem zweiten Portalgetriebe (40) ein Kegelradgetriebe aufweist.

5. Antriebseinrichtung nach einem der vorhergehenden Ansprüche, **dadurch gekennzeichnet, dass** zumindest eine von der ersten Antriebsachse (71) und der zweiten Antriebsachse (72) als Durchtriebsachse ausgestaltet ist und zum Ausgeben einer Antriebskraft über ein weiteres Übertragungselement mit einer weiteren Antriebsachse mechanisch wirkverbunden ist.

6. Antriebseinrichtung nach einem der vorhergehenden Ansprüche, **dadurch gekennzeichnet, dass** zumindest eine der Antriebsachsen (71, 72) ein Differentialgetriebe (61, 62) zum Antreiben von zwei Antriebsrädern aufweist.

7. Antriebseinrichtung nach einem der vorhergehenden Ansprüche, **dadurch gekennzeichnet, dass** die Antriebseinheit (1) zwei Antriebsmaschinen (11, 12) aufweist, die zum Ausgeben einer Antriebskraft mit der Zentralwelleneinheit (20) mechanisch wirkverbunden sind.

8. Antriebseinrichtung nach einem der vorhergehenden Ansprüche, **dadurch gekennzeichnet, dass** die Antriebseinheit (1) ein Differentialgetriebe aufweist, das zum Aufnehmen einer Antriebskraft mit der Antriebsmaschine (11, 12) mechanisch wirkverbunden ist und zum Ausgeben einer Antriebskraft mit dem ersten Portalgetriebe (30) und dem zweiten Portalgetriebe (40) mechanisch wirkverbunden ist.

9. Antriebseinrichtung nach einem der vorhergehenden Ansprüche, **dadurch gekennzeichnet, dass** die Antriebseinheit (1) ein Schaltgetriebe (15) aufweist, das über die Zentralwelleneinheit (20) zum Aufnehmen einer Antriebskraft mit der Antriebsmaschine (11, 12) mechanisch wirkverbunden ist und zum Ausgeben einer Antriebskraft mit dem ersten Portalgetriebe (30) und dem zweiten Portalgetriebe (40) mechanisch wirkverbunden ist.

10. Fahrzeug mit einer Antriebseinrichtung nach einem der vorhergehenden Ansprüche und vier Abtriebselementen, die zum Antreiben des Fahrzeugs eingerichtet sind, wobei zwei der Abtriebselemente von der ersten Antriebsachse (71) antreibbar sind, und
die anderen beiden Abtriebselemente von der zweiten Antriebsachse (72) antreibbar sind.
